# EUROPEAN PATENT APPLICATION

(11) **EP 0 992 399 A2**
(43) Date of publication of application: **12.04.2000**
(21) Application number: 99119528.0
(22) Date of filing: 01.10.1999
(51) Int. Cl.: B60R 9/12

(54) **Multipurpose ski rack for motor vehicles**

(30) Priority: 05.10.1998 IT TO980180 U
(71) Applicant: FAPA S.p.A., 10128 Torino (IT)
(72) Inventor: Baravalle, Ugo, 10190 Beinasco (TO) (IT)
(74) Representative: Saconney, Piero

(57) **Abstract**

A ski rack for a motor vehicle roof comprises a fitting body (12) and a pivoting upper arm (14) having a resiliently compressible strip element (26). The fitting body (12) has a plurality of seats (S1...S9) which have a configuration and dimensions such that they can accommodate, selectively, pairs of skis arranged on their sides and/or pairs of skis arranged flat and/or single skis arranged flat and/or at least one snowboard arranged flat.

## Description

The present invention relates to a ski rack for a motor vehicle roof, of the type comprising a lower bar provided with means for securing to the root in a transverse arrangement, a fitting body fixedly joined to the lower bar and extending along an upper side of the bar and having a plurality of seats which are open at the top for receiving skiing equipment, such as skis and/or snowboards, and a pivoting upper arm for locking the equipment, provided with a resiliently compressible strip element which extends along a lower side of the arm, and in which the arm is securable, in a lowered position, to the other end of the lower bar and is capable of confining the items of equipment in respective seats between the strip element and base surfaces of the seats.

The object of the invention is to propose a multi-purpose ski rack on which skiers can transport, as desired and in complete safety, skis of different types and also snowboards.

According to the invention, the object is achieved by means of a ski rack of the type under consideration, characterized in that the plurality of seats have a configuration and dimensions such that they can accommodate, selectively, pairs of skis arranged on their sides and/or pairs of skis arranged flat and/or single skis arranged flat and/or at least one snowboard arranged flat.

The subject-matter of the invention will become clear from the following detailed description which is given with reference to the appended drawings which are given by way of non-limiting example and in which:
- Figure 1 is a perspective view of a preferred embodiment of a ski rack according to the invention,
- Figure 2 is a front view thereof, and
- Figures 3 to 9 are diagrammatic front views thereof illustrating the same number of possible methods of loading skiing equipment (downhill skis and cross-country skis, snowboards) which are made possible by the ski rack of Figures 1 and 2.

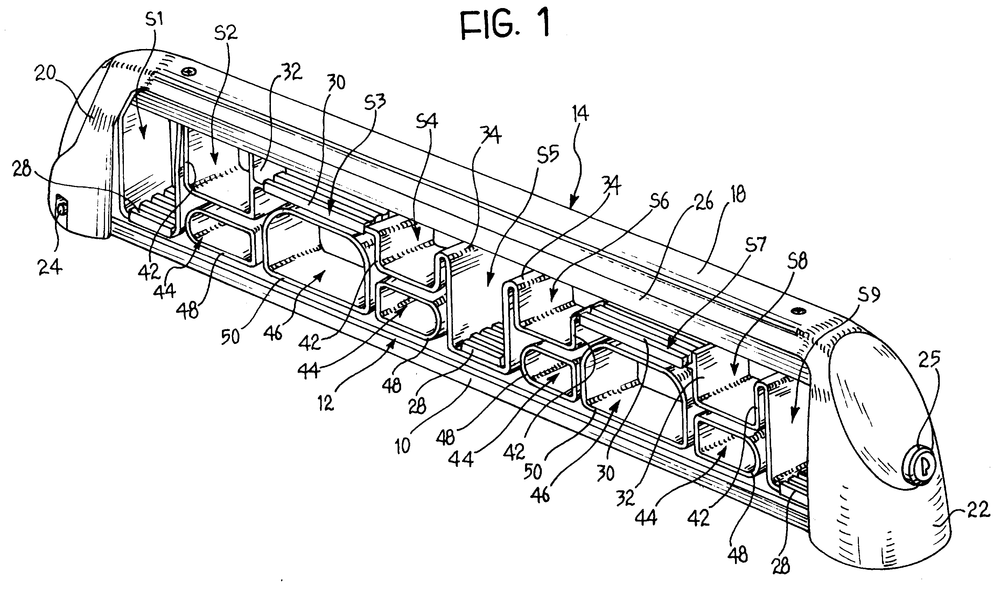

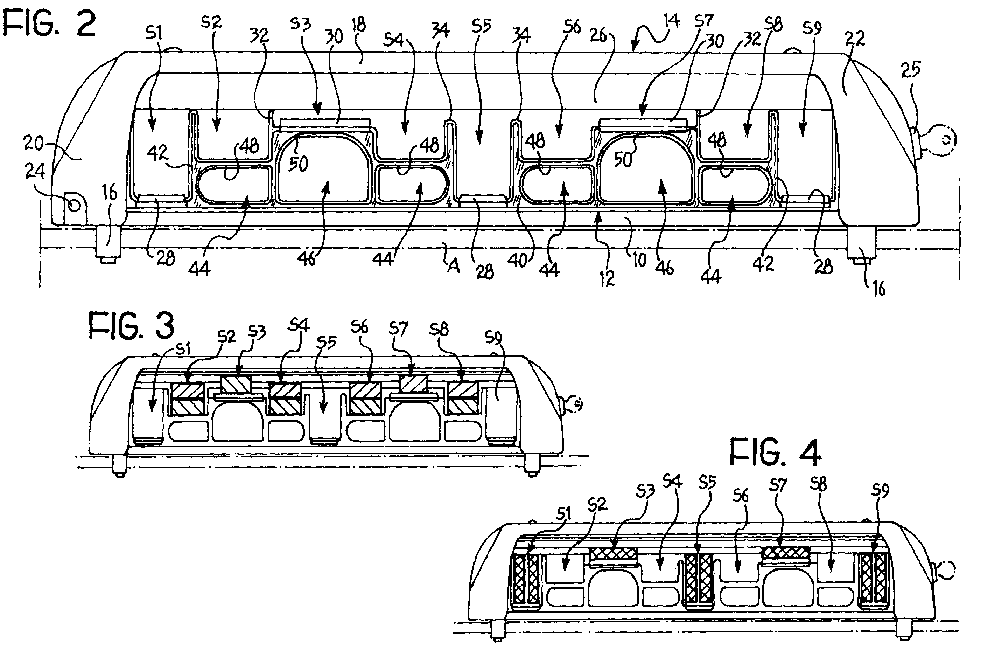

Referring to Figures 1 and 2, the ski rack represented is to be mounted on a motor vehicle roof in the known transverse arrangement and together with an identical ski rack.

The main elements of the ski rack are a lower bar 10, a fitting body 12 and a pivoting upper arm 14.

The lower bar 10, which may be constituted by a box-shaped metal section bar, is provided with brackets 16 which constitute means for securing a so-called carry-all bar, indicated A in Figure 2.

Alternatively, the bar 10 could be provided with securing means in the form of feet for securing it directly to the edges of the motor vehicle roof, or in the form of magnetic feet.

The fitting body 12, which will be described hereinafter in detail, is preferably constituted by a single-piece perforated structure of rigid moulded plastics material.

The fitting body 12 is fixedly joined to the lower bar 10 in a manner not shown but, alternatively, the bar 10, instead of being constituted by a separate section bar, could be formed integrally with a lower portion of a fitting body such as that indicated 12.

The pivoting upper arm has the general form of a horizontal C having an upper cross-member 18 and opposing side feet 20 and 22.

The foot 20 is hinged by means of a pin 24 to the corresponding end of the lower bar 10 in order to enable the arm 14 to move between the lowered position of Figures 1 and 2 and a raised position.

In the lowered position, the cross-member 18 of the arm 14 lies above the fitting body 12 in order to restrain the equipment loaded there; when it is in the raised position, the arm 14 enables the equipment to be loaded into and unloaded from suitable seats, described hereinafter, in the fitting body 12.

Preferably, for anti-theft purposes, the foot 22 is provided with a keylock 25 having an internal locking member which hooks into a corresponding latch projection which is unitary with the lower bar 10.

On the lower side of the cross-member 18 of the arm 14 extends a strip element 26 which is secured to said cross-member.

The strip element 26 is constituted by a hollow sectional member of resiliently deformable plastomeric or elastomeric material so that it can be compressed for the purposes which will be explained hereinafter.

According to the invention, the fitting body 12 comprises a plurality of seats S1...S9 which, as will be seen, have a configuration and dimensions such that they can accommodate, selectively, pairs of skis arranged on their sides and/or pairs of skis, arranged flat and/or single skis arranged flat and/or at least one snowboard arranged flat.

Proceeding from left to right in Figures 1 and 2, a first seat S1 is constituted by a relatively deep U-shaped recess for receiving a pair of downhill skis arranged on their sides. In order to provide cushioned support for the relatively heavy downhill skis, the seat S1 is provided with a base surface defined by a grooved pad 28 of soft elastomeric or plastomeric material.

A second seat S2 is constituted by a U-shaped recess, shallower than the seat S1, for receiving a pair of cross-country skis arranged flat or on their sides.

A third seat S3 has a base surface which is even more raised than that of the seat S2 and which is preferably defined by a grooved pad 30 of soft elastomeric or plastomeric material for the cushioned support not only of the ski but also, as will be seen hereinafter, of one or two snowboards.

A fourth seat S4 is constituted by a recess having the same depth as the second seat S2 in order to receive, once again, a pair of cross-country skis arranged flat or on their sides.

A fifth, central, seat S5 has a U-shape and a depth equal to that of the first seat S1 in order to receive yet another pair of downhill skis arranged on their sides.

The base surface of the seat S5 is again defined by a cushioning pad identical to the pad 28 and designated by the same reference numeral.

A sixth seat S6 is reflectively identical to the fourth seat S4; a seventh seat S7 is reflectively identical to the third seat S3 and is provided with a cushioning pad identical to the pad 30 and designated by the same reference numeral; an eighth seat S8 is reflectively identical to the second seat S2; a ninth seat S9 is reflectively identical to the first seat S1 and is provided with a cushioning pad identical to the pads 28 of seats S1 and S5 and designated by the same reference numeral. The arrangement of the seats S1...S4, on the one hand, and S9...S6, on the other hand, is symmetrical relative to the fifth, central, seat S5.

The third seat S3 and the seventh seat S7, which are spaced from one another in the direction of the extent of the bar 10 and of the cross-member 18, are delimited by partitions 32 only on their sides nearest the corresponding ends of the fitting body 12. The fourth and fifth seats S4, S5, on the one hand, and the fifth and sixth seats S5, S6, on the other hand, are separated by respective partitions 34 which do not extend to the level of the base surfaces, defined by the pads 30, of the third seat S3 and the seventh seat S7.

Owing to that arrangement, the surfaces of the pads 30 define two portions of a cushioned support surface for at least one snowboard and, preferably, for a pair of superposed snowboards, as will be seen hereinafter.

Preferably, the partitions 32 which separate, on the one hand, the second and third seats S2, S3 and, on the other hand, the seventh and eighth seats S7 and S8 extend to above the level of the support surface defined by the pads 30 in order to hold the snowboard(s) laterally.

The strip 26 of the locking arm 14 is compressible to such an extent that all of the items of skiing equipment and also one snowboard or two stacked snowboards can be clamped in their respective seats.

That concept will become clear from the description referring to Figures 3 to 9.

In the embodiment of Figures 1 and 2, the base surfaces of the seats S2, S4, S6 and S8 for cross-country skis do not have cushioning pads because cross-country skis, being relatively light, do not require such pads. However, those seats also could be provided with pads if desired.

Preferably, as shown, the fitting body 12 is constituted by a single-piece perforated structure.

The perforated structure comprises a perforated web indicated 40 in Figure 2 which lies in a median plane of the structure, parallel to the lower bar 10.

All of the recesses defining the above-mentioned seats S1...S9 are delimited by walls 42 perpendicular to the above-mentioned median plane. The walls 42 project from both faces of the web 40 and constitute the sides and the base surfaces proper, some of which have cushioning pads, of the seats S1...S9.

Also preferably, the perforated web 40 additionally has shaped weight-reducing openings arranged in the spaces not occupied by the seats. Thus, openings designated 44 are located below the seats S2, S4, S6 and S8 and openings 46 are located below the seats S3, S7.

The weight-reducing openings 44, 46 are also delimited by walls 48 and 50, respectively, similar to the walls 42 of the seats S1...S9.

Reference will now be made to Figures 3 to 9 in order to illustrate the possible methods of loading skiing equipment offered by a ski rack according to the invention.

For the sake of simplicity, only the seats S1...S9 are indicated in these Figures; cross-country skis are indicated by hatched rectangles; downhill skis are indicated by cross-hatched rectangles; snowboards are indicated by dotted rectangles.

In Figure 3, the seats S1 and S9 are empty; the seats S2, S4, S6 and S8 accommodate pairs of cross-country skis arranged flat; each of seats S3 and S7 accommodates one cross-country ski from a fourth pair arranged flat.

The flat arrangement of the pairs of cross-country skis of seats S2, S4, S6 and S8 is preferable to their arrangement on their sides when skis are loaded in seats S3, S7, in order to avoid interference between the bindings.

In Figure 4, seats S2, S4, S6 and S8 are empty and each of seats S1, S5 and S9 accommodates a pair of downhill skis arranged on their sides; each of seats S3 and S7 accommodates one ski from a fourth pair of downhill skis, arranged flat.

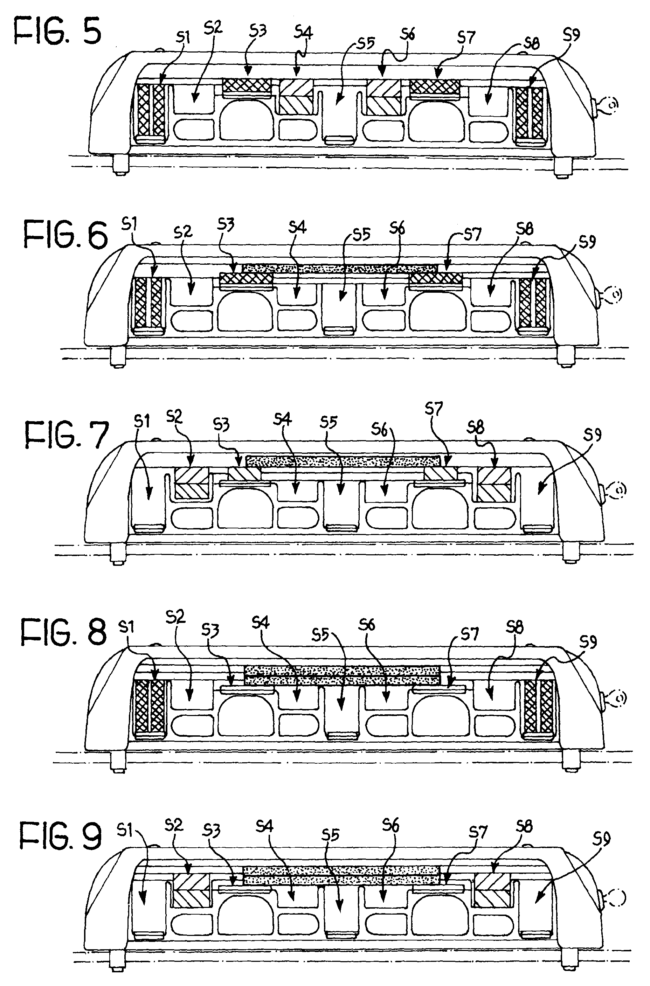

The arrangement of Figure 5 differs from that of Figure 4 by the fact that two pairs of cross-country skis arranged flat are accommodated by seats S4 and S6.

In Figure 6, each of seats S1 and S9 accommodates a pair of downhill skis arranged on their sides; seats S2, S4, S5, S6 and S8 are empty; each of seats S3 and S7 accommodates a downhill ski which is arranged flat, as in Figure 4, and above which a snowboard is arranged.

In Figure 7, seats S1, S5 and S9 are empty; each of seats S2 and S8 accommodates a pair of cross-country skis arranged flat; seats S3 and S7 accommodate single cross-country skis which are arranged flat and above which, as in Figure 6, a snowboard is again arranged.

In Figure 8, seats S1 and S9 again accommodate a pair of downhill skis arranged on their sides; seats S2, S5 and S8 are again empty as in Figure 6; two stacked snowboards are arranged on the support surfaces of seats S3, S7.

In Figure 9, seats S1, S5 and S9 are empty; each of seats S2 and S8 accommodates a pair of cross-country skis arranged flat; two stacked snowboards again rest on the surfaces of seats S3 and S7, as in Figure 8.

The strip element 26 is compressible to such an extent that it permits all of the arrangements illustrated in Figures 3 to 9. In particular, the support surface defined by the cushioning pads 30 of the third seat S3 and of the seventh seat S7 is at a level such that, and the strip element 26 of the locking arm 14 is compressible to such an extent that, either only a single respective ski arranged flat and a superposed snowboard (Figures 6 and 7) or a pair of stacked snowboards (Figure 9) can be clamped.

It will be appreciated that the scope of the invention covers ski racks in which the plurality of seats comprises seats disposed in different arrangements and in different numbers from those illustrated in the drawings.

## Claims

1. A ski rack for a motor vehicle roof, of the type comprising a lower bar (10) provided with means (16) for securing to the roof in a transverse arrangement, a fitting body (12) fixedly joined to the lower bar (10) and extending along an upper side of the bar and having a plurality of seats (S1...S9) which are open at the top for receiving skiing equipment, such as skis and/or snowboards, and a pivoting upper arm (14) for locking the equipment, provided with a resiliently compressible strip element (26) which extends along a lower side of the arm, and in which the arm (14) is securable, in a lowered position, to the other end of the lower bar (10) and is capable of confining the items of equipment in respective seats (S1...S9) between the strip element (26) and base surfaces of the seats, characterized in that the plurality of seats (S1...S9) have a configuration and dimensions such that they can accommodate, selectively, pairs of skis arranged on their sides and/or pairs of skis arranged flat and/or single skis arranged flat and/or at least one snowboard arranged flat.

2. A ski rack according to claim 1, characterized in that the plurality of seats comprises a pair of seats (S3, S7) which are spaced from one another in the direction of the extent of the lower bar (10) and of the cross-member (18) and which are arranged in such a manner that they each accommodate a single ski arranged flat and/or at least one snowboard resting on both of the seats (S3, S7) with the optional interposition of those skis between the base surface (30) of the seats and the snowboard.

3. A ski rack according to claim 2, characterized in that it comprises, proceeding from one end of the fitting body (12) to the other, a first seat (S1) for receiving a pair of downhill skis arranged on their sides, a second seat (S2) for receiving a pair of cross-country skis arranged flat or on their sides, a third seat (S3) for receiving a single downhill or cross-country ski arranged flat, a fourth seat (S4) for receiving a pair of cross-country skis arranged flat or on their sides, a fifth, central, seat (S5) for receiving a pair of downhill skis arranged on their sides, a sixth seat (S6) for receiving a pair of cross-country skis arranged flat or on their sides, a seventh seat (S7) for receiving a single downhill or cross-country ski arranged flat, an eighth seat (S8) for receiving a pair of cross-country skis arranged flat or on their sides, and a ninth seat (S9) for receiving a pair of downhill skis arranged on their sides, the first and the ninth seats, the second and the eighth seats, the third and the seventh seats and the fourth and the sixth seats being arranged symmetrically in pairs relative to the fifth, central, seat.

4. A ski rack according to claim 3, characterized in that the third seat (S3) and the seventh seat (S7) are delimited by partitions (32) only on their sides nearest the corresponding ends of the fitting body (12) in order to define, with their base surfaces, two surface portions (30) for supporting at least one snowboard, and in that the fourth, fifth and sixth seats (S4, S5, S6) are separated by respective partitions (34) which do not extend to above the level of the above-mentioned support surface (30) in order not to interfere with the snowboard.

5. A ski rack according to claim 4, characterized in that the second and third seats (S2, S3), on the one hand, and the seventh and eighth seats (S7, S8), on the other hand, are separated by partitions (32) which extend to above the level of the above-mentioned support surface (30) in order to hold at least one snowboard laterally.

6. A ski rack according to claim 4 or 5, characterized in that the support surface (30) defined in the third and in the seventh seats (S3, S7) is arranged at a level such that, and the strip element (26) of the locking arm is compressible to such an extent that, either only a single respective ski arranged flat on the support surface (30) and a snowboard superposed on those skis arranged flat, or a pair of stacked snowboards, with the lower snowboard resting on the support surface (30), can be clamped.

7. A ski rack according to any one of the preceding claims, characterized in that the fitting body (12) is constituted by a single-piece perforated structure of rigid moulded plastics material.

8. A ski rack according to claim 7, characterized in that the perforated structure (12) comprises a perforated web (40) which lies in a median plane of the structure, parallel to the lower bar (10), and has recesses defining the above-mentioned seats (S1...S9), and in that each of the above-mentioned recesses is delimited by walls (42) perpendicular to the above-mentioned median plane which project from both faces of the web (40) and which constitute the sides and the base surfaces of the seats (S1...S9).

9. A ski rack according to claim 8, characterized in that the perforated web (40) also has weight-reducing openings (44, 46) which are arranged in the spaces not occupied by the seats (S1...S9) and each of which is delimited by walls (48, 50) similar to the walls (42) of the seats.

10. A ski rack according to any one of the preceding claims, characterized in that at least some seats (S1, S3, S7, S9) have a base surface defined by a cushioning pad (28, 30) of soft elastomeric or plastomeric material.
